Europäisches Patentamt

European Patent Office

Office européen des brevets

(11) Veröffentlichungsnummer : **0 319 950 B1**

# EUROPÄISCHE PATENTSCHRIFT

(45) Veröffentlichungstag der Patentschrift :
08.05.91 Patentblatt 91/19

(51) Int. Cl.$^5$ : **B23K 11/00, B21F 27/10**

(21) Anmeldenummer : **88120442.4**

(22) Anmeldetag : **07.12.88**

(54) Querdrahtzuführung für eine Gitterschweissmaschine.

(30) Priorität : 07.12.87 DE 3741372

(43) Veröffentlichungstag der Anmeldung :
14.06.89 Patentblatt 89/24

(45) Bekanntmachung des Hinweises auf die
Patenterteilung :
08.05.91 Patentblatt 91/19

(84) Benannte Vertragsstaaten :
AT CH DE IT LI

(56) Entgegenhaltungen :
DE-C- 628 713
DE-C- 3 635 017

(56) Entgegenhaltungen :
GB-A- 2 041 899
US-A- 2 410 766
US-A- 3 050 614
US-A- 3 945 409

(73) Patentinhaber : Emil Jäger GmbH & Co. KG
Dahlweg 105
W-4400 Münster (DE)

(72) Erfinder : Schulte, Karl
Kuckucksweg 18
W-4440 Rheine (DE)

(74) Vertreter : Habbel, Hans-Georg, Dipl.-Ing.
Postfach 3429 Am Kanonengraben 11
W-4400 Münster (DE)

## Beschreibung

Die Erfindung bezieht sich auf eine Querdrahtzuführung für eine Gitterschweißmaschine.

Aus der DE-PS 36 35 017 ist eine vorteilhafte Querdrahtzuführung für eine Gitterschweißmaschine bekannt. Bei dieser bekannten Einrichtung erstreckt sich eine Querdrahtzubringerscheibe quer durch die Ebene des herzustellenden Gitters. Der Vorschub der Längsdrähte des Gitters erfolgt an der Querdrahtzubringerscheibe vorbei, und hinter dieser Scheibe werden die Querdrähte mit den Längsdrähten verschweißt.

Die Arbeitsleistung einer Gitterschweißmaschine kann dadurch verdoppelt werden, indem gleichzeitig zwei Querdrähte verschweißt werden. Da sich die Querdrahtzubringerscheibe durch die Gitterebene hindurch erstreckt, können nicht zwei solcher Scheiben hintereinander angeordnet werden, um zwei Querdrähte gleichzeitig zu verschweißen, da der von der in Förderrichtung zuerst angeordneten Scheibe abgelegte Querdraht auf die zweite Querdrahtzuführungsscheibe treffen würde und damit einen weiteren Vorschub des Gitters verhindern würde. Eine zweite Querdrahtzuführung darf demnach die Gitterebene nicht durchqueren.

Eine weitere Steigerung der Arbeitsleistung einer Gitterschweißmaschine kann dadurch erzielt werden, daß der von den Schweißelektroden zurückgelegte Weg zwischen ihrer vom Gitter entfernten Wartestellung und der am Gitter anliegenden Schweißstellung möglichst gering gehalten wird, um so die Schnelligkeit des Arbeitsablaufes zu steigern.

Eine Querdrahtzuführung für eine Gitterschweißmaschine mit
einem Kettentrieb, der im wesentlichen senkrecht zu der Gitterebene und in Längsrichtung des Gitters verläuft und der ein Ober- und ein Untertrum aufweist,
eine Vielzahl von nach außen gerichteten Mitnehmern an dem Kettentrieb, eine untere und eine obere Umlenkeinrichtung, und
zwei oder mehreren parallel und im Abstand zueinander ausgerichtete Kettentreiben, wobei die entsprechenden Mitnehmer mehrerer Kettentriebe quer zur Längsrichtung des Gitters miteinander fluchten und die Kettentriebe Querdrähte zwischen sich aufnehmen, ist aus der US-A-3050614 bekannt.

Aufgabe der Erfindung ist es, eine Querdrahtzuführung für Gitterschweißmaschinen zu schaffen, welche außerhalb der Gitterebene angeordnet ist, sich aber nahe an diese Ebene erstreckt und einen geringen Elektrodenhub erfordert.

Diese der Erfindung zugrundeliegende Aufgabe wird durch die in Anspruch 1 beschriebene vorrichtung gelöst.

Mit anderen Worten ausgedrückt, wird eine Querdrahtzuführung vorgeschlagen, die als zentrales Element einen Kettentrieb aufweist. Dieser Kettentrieb verläuft in einer zur Gitterebene im wesentlichen senkrechtstehenden Ebene, d.h. bei einer waagerechten Gitterebene verläuft der Kettentrieb in einer aufrechten Ebene. Dadurch weist der Kettentrieb ein Ober- und ein Untertrum auf, wobei das dem Gitter nähere Kettentrum, welches bei dem bevorzugten Ausführungsbeispiel das Untertrum ist, die Querdrähte bis zu ihrer vorbestimmten Position transportiert.

Zu diesem Zweck weist der Kettentrieb eine Vielzahl von nach außen gerichteten Mitnehmern auf, welche zum Transport der Querdrähte dienen und diese beaufschlagen.

Der Kettentrieb weist an seinen beiden Enden zwei Umlenkrollen auf, von denen eine höher angeordnet ist als die andere, so daß sich in Querrichtung zum Gitter gesehen eine schrägstehende Anordnung des Kettentriebes ergibt. Dabei ist im Bereich der unteren Umlenkrolle das untere Kettentrum über einen gewissen Bereich gitterparallel und nahe über dem Gitter geführt, bevor dieses Kettentrum an der unteren Umlenkrolle umgelenkt wird.

Die Querdrähte werden auf einer Gleitkufe geführt, welche parallel zu dem unteren Kettentrum verläuft, jedoch im Abstand von diesem, so daß die Querdrähte in dem Zwischenraum zwischen der Gleitkufe und dem Kettentrum beweglich sind. Die Gleitkufe erstreckt sich parallel zu dem schrägverlaufenden Bereich des Untertrums und parallel zu einem Teil des gitterparallelen Abschnitts des Untertrums.

Ebenfalls parallel zu dem Untertrum erstreckt sich eine senkrecht bewegliche und federnd gelagerte Klemmzunge. Ihr Abstand zum Untertrum ist dabei im schrägen Bereich des Untertrums größer als der Abstand der Gleitkufe zum Untertrum. Im gitterparallelen Bereich des Untertrums jedoch ist der Abstand der Klemmzunge geringer als der der Gleitkufe von dem Untertrum und geringer als der Durchmesser der verwendeten Querdrähte.

Im Bereich des gitterparallelen Abschnitts des Untertrums nahe der unteren Umlenkrolle ist ein Gegenhalter angeordnet, der eng an der Kette des Kettentriebes anliegt bzw. einen Abstand zu dieser Kette aufweist, der kleiner ist als der Durchmesser der kleinsten verwendeten Querdrähte. Auf diese Weise stellt der Gegenhalter einen Anschlag für die Querdrähte dar. Der Gegenhalter ist im Abstand von dem stirnseitigen Ende sowohl der Gleitkufe als auch der Klemmzunge angeordnet. Auf diese Weise wird ein Spalt geschaffen, durch welchen die Querdrähte auf das Gitter gelangen.

Eine sichere Führung der Querdrähte wird dadurch ermöglicht, daß eine Vielzahl der beschriebenen Querdrahtzuführungen parallel und im Abstand zueinander angeordnet werden, wobei die Mitnehmer der einzelnen Kettentriebe in Querrichtung des Gitters gesehen miteinander fluchten, so daß ein langer Querdraht von mehreren parallellaufenden Querdrahtzuführungen erfaßt und in seine Schweißposition gefördert wird.

Vorteilhafte Ausgestaltungen einer erfindungsgemäßen Querdrahtzuführung können den Unteransprüchen entnommen werden.

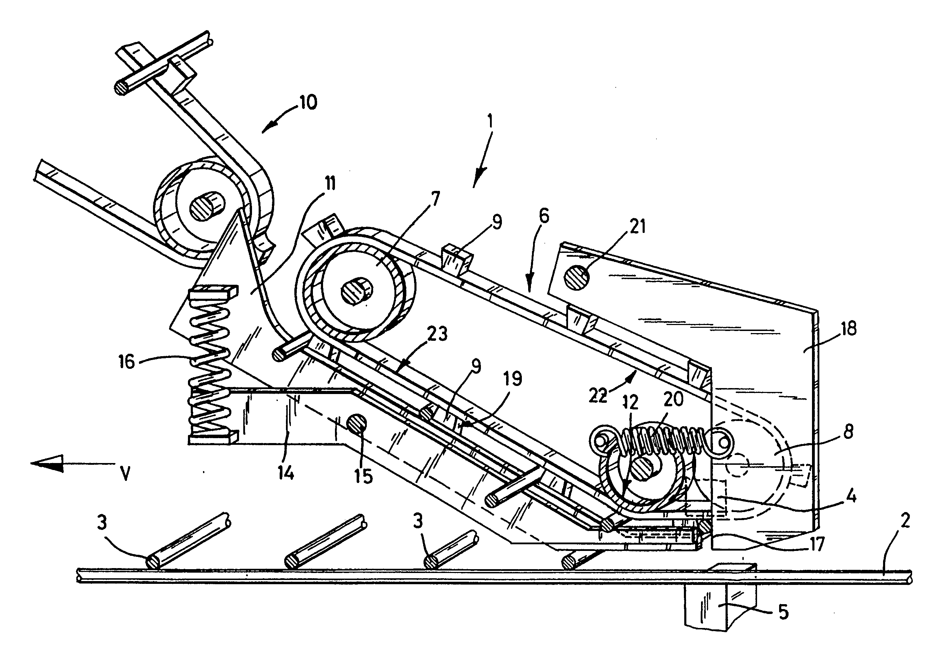

Ein Ausführungsbeispiel einer erfindungsgemäßen Querdrahtzuführung wird anhand der Zeichnung beschrieben. Sie zeigt schematisch außer einer Seitenansicht einer derartigen Querdrahtzuführung auch das Gitter, Schweißelektroden sowie eine Querdrahtfördereinrichtung.

In der Zeichnung ist mit dem Bezugszeichen 1 allgemein eine Querdrahtzuführung bezeichnet, die oberhalb einer Gitterebene angeordnet ist. Die Gitterebene wird dabei durch Längsdrähte 2 und auf diese Längsdrähte 2 geschweißte Querdrähte 3 gebildet. Eine obere Elektrode 4 und eine untere Elektrode 5 verschweißen die Querdrähte 3 mit den Längsdrähten 2, wobei anschließend das Gitter in Richtung des eingezeichneten Pfeiles V um eine Takteinheit weiterbewegt wird.

Die Querdrahtzuführung 1 beinhaltet einen Kettentrieb 6. Dieser Kettentrieb 6 weist ein Obertrum 22 und ein Untertrum 23 auf, welche um eine obere Umlenkrolle 7 und eine untere Umlenkrolle 8 geführt sind. Der Kettentrieb 6 weist an der Kette befestigte Mitnehmer 9 auf und wird entgegen dem Uhrzeigersinn um die beiden Umlenkrollen 7 und 8 umlaufend angetrieben.

Im Bereich der oberen Umlenkrolle 7 gelangen die Querdrähte von einer Querdrahtfördereinrichtung 10 in den Wirkungsbereich der Querdrahtzuführung 1. Zu diesem Zweck werden die Querdrähte von der Querdrahtfördereinrichtung 10 auf eine Gleitkufe 11 übergeben, welche sich schräg nach unten zum Bereich der unteren Umlenkrolle 8 hin erstreckt. Die Gleitkufe 11 verläuft dabeineben den Mitnehmern 9 in einem Abstand zum Kettentrieb 6, der geringer ist als die von der Kette nach außen gerichtete Ausdehnung der Mitnehmer 9. Auf diese Weise gleitet oder rollt ein Querdraht auf der Gleitkufe 11, bis er an einen Mitnehmer 9 anschlägt. Aufgrund des schräg nach unten gerichteten Verlaufs des Untertrums und der Gleitkufe 11 gelangt der Querdraht in dem Maße weiter nach unten zum Bereich der unteren Umlenkrolle 8, in welchem der Kettentrieb 6 und der entsprechende Mitnehmer 9 angetrieben und weiterbewegt werden.

Bevor das Untertrum an der unteren Umlenkrolle 8 anliegt, wird es bei einer mit 12 bezeichneten Stelle aus seiner schrägen Ausrichtung in eine zur Gitterebene parallel verlaufende Richtung abgewinkelt, so daß es von der mit 12 bezeichneten Stelle bis zum Anliegen an der unteren Umlenkrolle 8 gitterparallel verläuft. In diesem Bereich verläuft die Gleitkufe 11 in demselben Abstand zum Kettentrieb 6 wie im schrägen Bereich des Untertrums.

Eine Klemmzunge 14 verläuft in diesem gitterparallelen Abschnitt des Untertrums in einem geringeren Abstand zu diesem, als es dem Abstand der Gleitkufe zu dem Untertrum entspricht, wobei der Abstand der Klemmzunge zum Untertrum hier geringer ist als der Durchmesser der verwendeten Querdrähte.

Aufgrund einer um eine Achse 15 drehbeweglichen Lagerung der Klemmzunge 14 und der Wirkung einer Druckfeder 16 hält der untere und gitterparallele Abschnitt der Klemmzunge 14 federnd nachgiebig einen Abstand zum Kettentrieb 6 ein, der geringer ist als der kleinste Durchmesser verschiedener verwendeter Querdrähte.

Wenn der beschriebene Querdraht von der Querdrahtfördereinrichtung (10) bis zur Stelle 12 gelangt ist, bewegt sich der Mitnehmer 9, an welchem der Querdraht bisher anlag, weiter. Der Querdraht selbst jedoch wird aufgrund des geringen Abstandes der Klemmzunge 14 zum Kettentrieb 6 von der Klemmzunge 14 festgehalten und verbleibt in seiner fest geklemmten Stellung. Der nächste Mitnehmer 9 wird den Querdraht vor sich herschieben und gegen die Wirkung der Druckfeder 16 über den gitterparallelen Bereich der Klemmzunge 14 schieben, bis der Querdraht zwischen den beiden Elektroden 4 und 5 angelangt ist.

Dort schlägt der Querdraht an eine Anschlagfläche 17 eines Gegenhalters 18 an. In dieser Stellung wird die Bewegung des Kettentriebes 6 unterbrochen. Aufgrund des schrägen Verlaufes einer Vorderkante 19 des Mitnehmers 9 wird der Querdraht zwischen dem Mitnehmer 9 und der Anschlagfläche 17 des Gegenhalters 18 festgeklemmt. Der Gegenhalter 18 kann gegen die Wirkung einer Zugfeder 20 um eine Schwenkachse 21 verschwenkt werden. Er liegt demnach mit seiner Anschlagfläche 17 federnd nachgiebig an dem Querdraht an, wobei die Anschlagfläche 17 bei der Bewegung des Gegenhalters 18 eine im wesentlichen waagerechte Bewegung ausführt.

Durch eine Abwärtsbewegung entweder der oberen Elektrode 4 oder eines gleichwirkenden und nicht dargestellten Stempels wird der Querdraht gegen die Klemmwirkung zwischen der Vorderkante 19 des Mitnehmers 9 und der Anschlagfläche 17 des Gegenhalters 18 nach unten gedrückt. Dabei wird der Gegenhalter 18 um seine Schwenkachse 21 verschwenkt. Der Querdraht gelangt dadurch senkrecht nach unten auf seine vorbestimmte Position auf den Längsdrähten 2, so daß er anschließend mit diesen verschweißt werden kann.

Die dicht über der Gitterfläche erfolgende Querdrahtzuführung verlangt einen nur geringen Elektrodenhub der oberen Elektrode 4 und ermöglicht eine schnelle Arbeitsgeschwindigkeit der Schweißmaschine.

Insbesondere kann die Arbeitsleistung der Gitterschweißmaschine dadurch gesteigert werden, daß die beschriebene erfindungsgemäße Querdrahtzuführung zusätzlich zu einer bekannten, eingangsbeschriebenen Querdrahtzuführung verwendet wird, welche sich durch die Gitterebene erstreckt. Die erfindungsgemäße Querdrahtzuführung arbeitet oberhalb der Gitterebene und kann damit auch dort eingesetzt werden, wo durch die andere bekannte Querdrahtzuführung schon Querdrähte auf die Längsdrähte des Gitters aufgebracht worden sind.

Wenn die erfindungsgemäße Querdrahtzuführung einzeln eingesetzt wird, kann sie abweichend von der in der Zeichnung dargestellten Anordnung symmetrisch dazu angeordnet werden, so daß das Untertrum nicht entgegengesetzt sondern gleichgerichtet zu der Vorschubrichtung V bewegt wird. Bei Verwendung zusammen mit einer zweiten bekannten Querdrahtzuführung ist die dargestellte Anordnung vorteilhaft, da dann der gitterparallele Bereich, in dem die Querdrähte abgelegt werden, nahe an die andere Querdrahtzuführung gebracht werden kann.

Um eine sichere Festlegung der Querdrähte zu erreichen, sind wenigstens zwei, üblicherweise aber eine Vielzahl, der beschriebenen Querdrahtzuführungen parallel zueinander angeordnet, wobei die entsprechenden Mitnehmer 9 der verschiedenen Kettentriebe 6 miteinander fluchtend ausgerichtet sind, so daß ein Querdraht gleichzeitig an mehreren Mitnehmern 9 und mehreren Gleitkufen 11 von mehreren Querdrahtzuführungen 1 anliegt.

Um verschiedene Drahtdicken für die Querdrähte verwenden zu können, ist der Mindestabstand der Gleitkufe 11 oder der Klemmzunge 14 zur Oberkante der Längsdrähte 2 größer gewählt als der größte verwendete Drahtdurchmesser bei den Querdrähten.

Der Antrieb des Kettentriebes 6 erfolgt intermittierend, wobei der Antrieb unterbrochen wird, sobald ein Querdraht unterhalb der oberen Elektrode 4 und an der Anschlagfläche 17 angelangt ist, und wobei der Antrieb des Kettentriebes 6 frühestens dann wieder aufgenommen wird, wenn der Querdraht unterhalb des Wirkungsbereichs der Mitnehmer 9 angelangt ist.

Jedem Mitnehmer 9 liegt damit im Bereich des Untertrums des Kettentriebes 6 an seiner Hinterkante ein Querdraht an und jeder Mitnehmer 9 drückt im gitterparallelen Bereich des Kettentriebes 6 einen Querdraht vor sich her bis an die Anschlagfläche 17. Der ursprünglich an der Hinterkante des Mitnehmers 9 anliegende Querdraht wird in diesem gitterparallelen Bereich des Untertrums zwischen der mit 12 bezeichneten Stelle und der Hinterkante des Mitnehmers 9 durch die Klemmzunge 14 festgeklemmt.

**Ansprüche**

1. Querdrahtzuführung für eine Gitterschweißmaschine, mit

a) einem Kettentrieb (6), der im wesentlichen senkrecht zu der Gitterebene und in Längsrichtung des Gitters verläuft und der ein Ober- (22) und ein Untertrum (23) aufweist,

b) einer Vielzahl von nach außen gerichteten Mitnehmern (9) an dem Kettentrieb (6),

c) einer unteren und einer oberen Umlenkeinrichtung (7, 8) für den Kettentrieb, wobei ein Abschnitt des Untertrums (23) im Bereich der unteren Umlenkeinrichtung (Umlenkrolle 8) parallel zu und in geringem Abstand über der Gitterfläche geführt ist,

d) einer die Querdrähte führenden Gleitkufe (11), die sich im Abstand und parallel zu dem Untertrum (23) erstreckt, wobei dieser Abstand größer ist als der größte verwendete Drahtdurchmesser,

e) einer federnd gelagerten Klemmzunge (14), die sich im Abstand und parallel zu dem Untertrum (23) unterhalb von diesem erstreckt, wobei der Abstand zum Untertrum (23) im wesentlichen größer ist als der der Gleitkufe (11) zum Untertrum (23), jedoch im gitterparallelen und unteren Bereich des Untertrums (23) geringer ist als der Abstand der Gleitkufe (11) zum Untertrum (23) und geringer als der Durchmesser der verwendeten Querdrähte, und wobei die Klemmzunge (14) in diesem gitterparallelen Bereich im wesentlichen senkrecht beweglich ausgebildet ist,

f) einem Gegenhalter (18), der im gitterparallelen Bereich des Untertrums (23) eine Anschlagfläche (17) für die Querdrähte schafft, wobei die Anschlagfläche (17) in einem Abstand zu den Stirnseiten der Gleitkufe (11) und der Klemmzunge (14) angeordnet ist,

g) zwei oder mehreren parallel und im Abstand zueinander ausgerichteten Kettentrieben (6), Gleitkufen (11), Klemmzungen (14) und Gegenhalter (18), wobei die entsprechenden Mitnehmer (9) mehrerer Kettentriebe (6) quer zur Längsrichtung des Gitters miteinander fluchten und die Gleitkufen (11) und die Kettentriebe (6) Querdrähte zwischen sich aufnehmen.

2. Querdrahtzuführung nach Anspruch 1, wobei die Anschlagfläche (17) in Längsrichtung des Gitters im Bereich der Schweißelektroden (4, 5) angeordnet ist.

3. Querdrahtzuführung nach Anspruch 1 oder 2, wobei der Abstand zwischen der Anschlagfläche (17) und der Stirnseite der Gleitkufe (11) und der Klemmzunge (14) kleiner ist als der Durchmesser der verwendeten Querdrähte und wobei die Anschlagfläche (17) waagerecht federnd gelagert ist.

4. Querdrahtzuführung nach einem der Ansprüche 1 bis 3, wobei sich die Gleitkufe (11) in Längsrichtung des Gitters über den Bereich des Kettentriebes (6) hinaus in Bewegungsrichtung des Obertrums (22) erstreckt.

5. Querdrahtzuführung nach einem der Ansprüche 1 bis 4, wobei sich die Mitnehmer (9) von ihrer zugeordneten Kette aus weiter nach außen erstrecken als es dem Abstand zwischen Kette und Gleitkufe (11) entspricht und wobei die Mitnehmer (9) und die Gleitkufe (11) in Längsrichtung des Gitters gesehen nebeneinander angeordnet sind.

6. Querdrahtzuführung nach einem der Ansprüche 1 bis 5, wobei die Vielzahl von Kettentrieben (6) gemeinsam angetrieben ist.

7. Querdrahtzuführung nach einem der Ansprüche 1 bis 6, wobei die Kettentriebe (6) intermittierend angetrieben sind.

8. Querdrahtzuführung nach einem der Ansprüche 1 bis 7, wobei das Untertrum (23) gegen die Bewegungsrichtung des Gittervorschubes V̲ bewegt wird.

## Claims

1. A transverse wire supply for a grid welding machine, comprising
   a) a chain drive (6), which runs substantially perpendicularly to the plane of the grid and in the longitudinal direction thereof and which comprises a top (22) and a bottom run (23),
   b) a plurality of outwardly directed carriers (9) on the chain drive (6),
   c) a lower and an upper reversing device (7, 8) for the chain drive, a section of the lower run (23) being guided in the region of the lower reversing device (reversing roll 8) in parallel with and at a short distance above the grid surface,
   d) a slide runner (11) guiding the transverse wires and extending at a distance from and in parallel with the bottom run (23), this distance being greater than the greatest wire diameter used,
   e) a spring mounted clamping tongue (14), which extends below the bottom run (23) at a distance therefrom and in parallel therewith, the distance from the bottom run (23) being substantially greater than that between the slide runner (11) and the bottom run (23) but less in the lower region of the lower run (23), which region is parallel with the grid, than the distance between the slide runner (11) and the bottom run (23) and less than the diameter of the transverse wires used, and the clamping tongue (14) being constructed to be substantially perpendicularly movable in this grid-parallel region,
   f) a counter-support (18), which forms a stop face (17) for the transverse wires in the grid-parallel region of the bottom run (23), the stop face (17) being arranged at a distance from the ends of the slide runner (11) and the clamping tongue (14),
   g) two or more chain drives (6), slide runners (11), clamping tongues (14) and counter-supports (18) being aligned in parallel with and at a distance from each other, the corresponding carriers (9) of several chain drives (6) being aligned with each other perpendicularly to the longitudinal direction of the grid and the slide runners (11) and the chain drives (6) accommodating transverse wires between them.

2. A transverse wire supply according to claim 1, the stop face (17) being arranged in the longitudinal direction of the grid in the region of the welding electrodes (4, 5).

3. A transverse wire supply according to claim 1 or claim 2, the distance between the stop face (17) and the end of the slide runner (11) and the clamping tongue (14) being smaller than the diameter of the transverse wires used, and the stop face (17) being horizontally spring-mounted.

4. A transverse wire supply according to any one of claims 1 to 3, the slide runner (11) extending in the longitudinal direction of the grid beyond the region of the chain drive (6) in the direction of movement of the top run (22).

5. A transverse ire supply according to any one of claims 1 to 4, the carriers (9) extending further outwards from their associated chains than the distance between chain and slide runner (11), and the carriers (9) and the slide runner (11) being arranged next to each other when viewed in the longitudinal direction of the grid.

6. A transverse are supply according to any one of claims 1 to 5, the plurality of chain drives (6) being jointly driven.

7. A transverse wire supply according to any one of claims 1 to 6, the chain drives (6) being driven intermittently.

8. A transverse wire supply according to any one of claims 1 to 7, the bottom run (23) being moved counter to the direction of the movement of the grid feed V̲.

## Revendications

1. Alimentation en fils transversaux pour une machine à souder les grillages avec
   a) une transmission par chaîne (6) qui court substantiellement perpendiculairement au plan du grillage et dans le sens longitudinal du grillage et présente un brin supérieur (22) et un brin inférieur (23),
   b) une pluralité d'entraîneurs (9) dirigés vers l'extérieur sur l'entraînement par chaîne (6),
   c) un dispositif de renvoi supérieur et un inférieur (7, 8) jour l'entraînement par chaîne, une section du brin inférieur (23) étant alors guidée dans la zone du dispositif de renvoi inférieur (rouleau de renvoi 8) parallèlement à et à peu de distance au-dessus de la surface du grillage,
   d) un patin de glissement (11) guidant les fils transversaux, qui s'étend à distance et parallèlement au brin inférieur (23), cette distance étant alors plus grande que le plus grand diamètre de fil utilisé,

e) une languette de serrage (14) disposée de manière élastique, qui s'étend à distance et parallèlement au brin inférieur (23) sous celui-ci, la distance du brin inférieur (23) étant alors substantiellement plus grande que celle du patin de glissement (11) au brin inférieur (23), mais plus petite dans la zone parallèle au grillage et inférieure du brin inférieur (23) que la distance du patin de glissement (11) au brin inférieur (23) et plus petite que le diamètre des fils transversaux utilisés, et la languette de serrage (14) étant alors construite dans cette zone parallèle au grillage de manière substantiellement mobile verticalement,

f) une contre-bouterolle (18) qui forme dans la zone parallèle au grillage du brin inférieur (23) une surface d'arrêt (17) pour les fils transversaux, la surface d'arrêt (17) étant alors disposée à distance des faces avant du patin de glissement (11) et de la longuette de serrage (14),

g) deux ou plusieurs entraînements par chaîne (6), patins de glissement (11), languettes de serrage (14) et contre-bouterolles (18) disposés parallèlement et à distance les uns des autres, les entraîneurs (9) correspondants de plusieurs entraînements par chaîne (6) étant alors alignés les uns avec les autres perpendiculairement ou sens longitudinal du grillage et les patins de glissement (11) et les entraînements par chaîne (6) recueillant des fils transversaux entre eux.

2. Alimentation en fils transversaux selon la revendication 1, dans laquelle la surface d'arrêt (17) est disposée dans le sens longitudinal du grillage dans la zone des électrodes de soudage (4, 5).

3. Alimentation en fils transversaux selon la revendication 1 ou 2, dans laquelle la distance entre la surface d'arrêt (17) et la face avant du patin de glissement (11) et de la languette de serrage (14) est plus petite que le diamètre des fils transversaux utilisés et dans laquelle la surface d'arrêt (17) est disposée de manière élastique horizontalement.

4. Alimentation en fils transversaux selon l'une des revendications 1 à 4, dans laquelle le patin de glissement (11) s'étend dans le sens longitudinal du grillage au-dessus de la zone de l'entraînement par chaîne (6) dans le sens du déplacement du brin supérieur (22).

5. Alimentation en fils transversaux selon l'une des revendications 1 a 4, dans laquelle les entraîneurs (9) s'étendant de leur chaîne respective vers l'extérieur plus loin que ce qui correspond à la distance entre la chaîne et le patin de glissement (11) et dans laquelle les entraîneurs (9) et le patin de glissement (11) sont disposés l'un à côté de l'autre vus dans le sens longitudinal du grillage.

6. Alimentation en fils transversaux selon l'une des revendications 1 à 5, dans laquelle la pluralité d'entraînements par chaîne (9) a un entraînement commun.

7. Alimentation en fils transversaux selon l'une des revendications 1 à 6, dans laquelle les entraînements par chaîne (6) sont activés par intermittence.

8. Alimentation en fils transversaux selon l'une des revendications 1 à 7, dans laquelle le brin inférieur (23) est déplacé dans le sens de l'avance du grillage V.